# EUROPEAN PATENT APPLICATION

(11) **EP 4 825 792 A1**
(43) Date of publication of application: **21.10.2026**
(21) Application number: 24904320.9
(22) Date of filing: 16.12.2024
(51) Int. Cl.: C01B 3/04, C01B 3/56

(54) **HYDROGEN PRODUCTION APPARATUS FOR PRODUCING HYDROGEN FROM AMMONIA**

(30) Priority: 15.12.2023 KR 20230183926
(71) Applicant: POSCO Holdings Inc., Pohang-si, Gyeongsangbuk-do 37859 (KR)
(72) Inventor: CHOI, Jeong-Ho, Pohang-si, Gyeongsangbuk-do 37877 (KR); RHEE, Chang-Houn, Pohang-si, Gyeongsangbuk-do 37877 (KR); AHN, Chi-Kyu, Pohang-si, Gyeongsangbuk-do 37877 (KR); KIM, Gook-Hee, Pohang-si, Gyeongsangbuk-do 37877 (KR); HWANG, Jong-Soo, Pohang-si, Gyeongsangbuk-do 37877 (KR); JEON, Nam-Gi, Pohang-si, Gyeongsangbuk-do 37877 (KR)
(74) Representative: Pfenning, Meinig & Partner mbB
(86) International application number: PCT/KR2024/020418
(87) International publication number: WO 2025/127755

(57) **Abstract**

A hydrogen production apparatus of the present invention comprises: an ammonia decomposition reactor for decomposing ammonia to discharge a mixed gas including hydrogen, nitrogen, and unreacted ammonia; an ammonia remover for receiving the mixed gas, adsorbing and removing the unreacted ammonia included in the mixed gas, and discharging a first product gas including hydrogen and nitrogen and a first tail gas; and a nitrogen remover for receiving the first product gas, removing nitrogen included in the first product gas, and discharging a second product gas including hydrogen and a second tail gas, wherein the second product gas discharged from the nitrogen remover is resupplied to the nitrogen remover as a purge gas and a pressurizing gas. According to the hydrogen production apparatus of the present invention, high-purity hydrogen can be continuously produced in large quantities.

## Description

### Technical Field

The present disclosure relates to a hydrogen production apparatus for producing hydrogen from ammonia.

### Background Art

Hydrogen production technologies are generally classified into gray hydrogen technology, which generates carbon dioxide in the process of producing hydrogen from fossil fuels, blue hydrogen technology, which produces synthesis gas using underutilized energy sources such as low-grade coal, petroleum coke, biomass, and waste products, and then reforms the synthesis gas to produce hydrogen, and green hydrogen technology, which produces hydrogen through the electrolysis of water using renewable energy sources.

Although green hydrogen is considered a next-generation energy source, research into hydrogen production through natural gas reforming and ammonia decomposition is continuously being developed due to the high cost of hydrogen production. Here, since the natural gas reforming process emits carbon dioxide during the hydrogen production process, the importance of a hydrogen production process using ammonia, which does not generate carbon dioxide during the reaction process, is gradually increasing.

In particular, ammonia is emphasized as an essential technology for achieving carbon neutrality, in that it has a storage capacity of 120 kg/m³ as an ultra-high-capacity hydrogen storage and transport medium and may utilize existing storage and transportation infrastructure almost as it is.

Hydrogen produced from ammonia decomposition may be used in various applications; however, in order to be used at a fuel-quality level, removal of ammonia and securing of high-purity hydrogen are required. The removal of unreacted residual ammonia and the hydrogen/nitrogen separation process are key elements for producing high-purity hydrogen. As the residual ammonia removal and hydrogen/nitrogen separation process, a temperature swing adsorption (TSA) process or a pressure swing adsorption (PSA) process is generally used, and the PSA process is a method of separating gases by adsorbing an adsorbate using an adsorption agent through pressure variation. The PSA process includes a series of steps such as adsorption/desorption/pressurization/depressurization, and product quality and recovery may be secured by changing conditions such as pressure, temperature, and gas flow in each step. However, due to a trade-off relationship between recovery rate and purity in the PSA process, there is a need for a process capable of improving the recovery rate while ensuring high purity.

### Summary of Invention

### Technical Problem

An aspect of the present disclosure is to provide a hydrogen production apparatus capable of producing high-purity hydrogen in large quantities.

Another aspect of the present disclosure is to provide a hydrogen production apparatus of reducing an amount of input raw materials and reducing an amount of exhaust gas.

### Solution to Problem

According to an aspect of the present disclosure, a hydrogen production apparatus includes: an ammonia decomposition reactor decomposing ammonia to discharge a mixed gas including hydrogen, nitrogen, and unreacted ammonia; an ammonia remover receiving the mixed gas, adsorbing and removing the unreacted ammonia included in the mixed gas, and discharging a first product gas and a first tail gas; and a nitrogen remover receiving the first product gas, removing nitrogen included in the first product gas, and discharging a second product gas and a second tail gas, in which the second product gas discharged from the nitrogen remover is resupplied to the nitrogen remover as a purge gas and a pressurizing gas.

According to another aspect of the present disclosure, the first tail gas discharged from the ammonia remover may be resupplied to the ammonia decomposition reactor as a combustion gas for removing the unreacted ammonia by combustion, the first product gas discharged from the ammonia remover may be resupplied to the ammonia remover as the pressurizing gas, and the second tail gas discharged from the nitrogen remover may be resupplied to the ammonia remover as the purge gas.

According to another aspect of the present disclosure, the first product gas may include 75 to 80 vol% of hydrogen and 20 to 25 vol% of nitrogen.

According to another aspect of the present disclosure, the first tail gas may include 10 to 20 vol% of hydrogen, 40 to 45 vol% of nitrogen, and 40 to 45 vol% of ammonia.

According to another aspect of the present disclosure, the first product gas may include 0.3 to 1 ppm of ammonia.

According to another aspect of the present disclosure, the second product gas may include 99 vol% or more of hydrogen.

According to another aspect of the present disclosure, the second tail gas may include 25 to 30 vol% of hydrogen and 70 to 75 vol% of nitrogen.

According to another aspect of the present disclosure, the second tail gas may include 0.5 to 1 ppm of ammonia.

According to another aspect of the present disclosure, the ammonia remover and the nitrogen remover may include carbon molecular sieve (CMS), zeolite, metal-organic framework (MOF), or covalent organic frameworks (COF) as an adsorption agent.

According to another aspect of the present disclosure, an adsorption time in the ammonia remover may be 360 to 480 seconds, and an adsorption pressure may be 7 to 8 barG.

According to another aspect of the present disclosure, an adsorption time in the nitrogen remover may be 240 to 360 seconds, and an adsorption pressure may be 7 to 8 barG.

### Advantageous Effects of Invention

According to an aspect of the present disclosure, it is possible to increase the purity of the produced hydrogen.

According to an aspect of the present disclosure, it is possible to produce high-purity hydrogen in large quantities.

According to an aspect of the present disclosure, it is possible to reduce the environmental pollution occurring during the hydrogen production process.

### Brief Description of Drawings

FIG. 1 is a diagram schematically illustrating a hydrogen production apparatus according to an aspect of the present disclosure.
FIG. 2 is a diagram schematically illustrating a process of an ammonia decomposition reactor according to an aspect of the present disclosure.
FIG. 3 is a diagram schematically illustrating a process of an ammonia remover according to an aspect of the present disclosure.
FIG. 4 is a diagram schematically illustrating a process of a nitrogen remover according to an aspect of the present disclosure.
FIG. 5 is a diagram illustrating a pressure change within the ammonia remover.
FIG. 6 is a diagram illustrating the pressure change within the nitrogen remover.
FIG. 7 is a diagram illustrating a concentration of ammonia included in the first product gas and a concentration of ammonia included in the second product gas.
FIG. 8 is a diagram illustrating a hydrogen concentration of the second product gas.

### Best Mode for Invention

Hereinafter, the present disclosure will be described in detail with reference to the accompanying drawings. However, this is merely exemplary, and the present disclosure is not limited to the specific embodiments described by way of example.

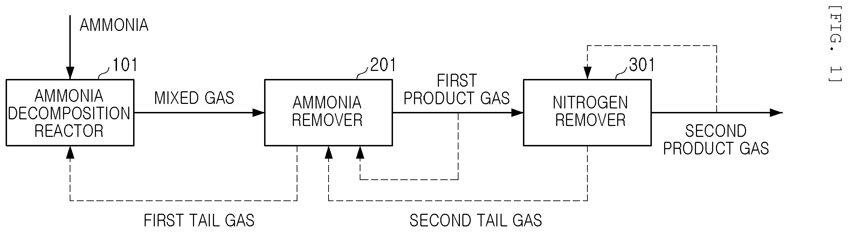

FIG. 1 is a diagram schematically illustrating a hydrogen production apparatus according to an aspect of the present disclosure.

Referring to FIG. 1, the hydrogen production apparatus according to an example embodiment of the present disclosure includes an ammonia decomposition reactor 101, an ammonia remover 201, and a nitrogen remover 301.

The ammonia remover 201 and the nitrogen remover 301 of the present disclosure may remove ammonia and nitrogen, respectively, by a pressure swing adsorption (PSA) process. When the two processes are operated in a linked manner, a product gas and a tail gas generated in each process may be recycled.

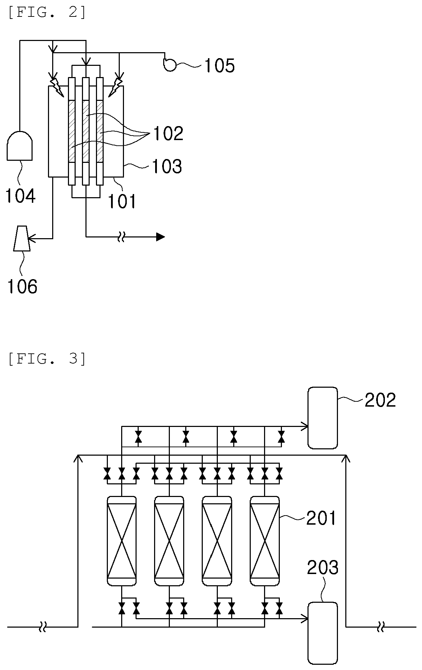

FIG. 2 is a process diagram schematically illustrating a process of the ammonia decomposition reactor 101 according to an example embodiment of the present disclosure. The ammonia decomposition reactor 101 decomposes ammonia to produce hydrogen and nitrogen. Specifically, the ammonia decomposition reactor 101 decomposes ammonia to discharge a mixed gas including hydrogen, nitrogen, and unreacted ammonia.

The ammonia decomposition reactor 101 may be one or more. When two or more ammonia decomposition reactors 101 are provided, ammonia may be divided and simultaneously decomposed, and the temperatures of the ammonia decomposition reactors 101 may be uniformly controlled, thereby improving efficiency.

A reaction equation of the ammonia decomposition reaction may be an endothermic reaction as follows:

Ammonia decomposition reaction: 2NH₃ → N₂ + 3H₂ (△H=46 kJ/mol)

The ammonia decomposition reactor 101 according to an example embodiment may include a reactor 102 in which the ammonia decomposition reaction described above occurs to generate nitrogen and hydrogen. An internal temperature of the reactor 102 may be, for example, 500 to 650°C, but a temperature condition may vary depending on a process configuration and a catalyst used. The internal pressure of the reactor 102 is not particularly limited, but may be, for example, 0 to 7 barG. The pressure range described above may vary depending on operating pressures of the ammonia remover 201, the nitrogen remover 301, and the like downstream of the ammonia decomposition reactor 101.

The ammonia decomposition reactor 101 according to an example embodiment may include a combustor 103 supplying heat to the reactor 102. The combustor 103 may heat the reactor 102 by combustion of combustion air and fuel, and may supply heat to the reactor 102.

The combustor 103 may be supplied with fuel and combustion air, and may generate heat according to a combustion reaction with oxygen in the combustion air. The fuel is not particularly limited as long as it is a fuel commonly used for a combustion reaction, and may be, for example, fossil fuel-based LNG or LPG, but hydrogen and ammonia may be co-fired to prevent CO₂ emission.

The internal temperature of the combustor 103 is not particularly limited, but may be, for example, 700 to 1000°C. In the above-described temperature range, the combustor 103 may efficiently heat the reactor 102 so that the ammonia decomposition reaction proceeds.

The ammonia decomposition reactor 101 may include a catalyst as necessary to improve efficiency of the decomposition reaction. The catalyst may be a conventional catalyst used in the ammonia decomposition, and specifically may be a nickel-based catalyst or a ruthenium-based catalyst.

An example embodiment may further include a liquid ammonia tank 104 supplying liquid ammonia to the ammonia decomposition reactor 101. In addition, an ammonia pump (not illustrated) supplying the liquid ammonia may be further included.

An example embodiment may further include an air blower 105 supplying combustion air from outside to the combustor 103 in the ammonia decomposition reaction process.

FIG. 3 is a diagram schematically illustrating a process of an ammonia remover 201 according to an example embodiment of the present disclosure. The ammonia remover 201 according to an example embodiment may receive a mixed gas discharged from the ammonia decomposition reactor 101 and may remove unreacted ammonia included in the mixed gas by adsorption. Specifically, the ammonia remover 201 adsorbs and removes the unreacted ammonia included in the mixed gas and discharges a first product gas and a first tail gas including hydrogen and nitrogen. The first product gas discharged from the ammonia remover 201 is supplied to the nitrogen remover 301.

According to an example embodiment of the present disclosure, the first tail gas discharged from the ammonia remover 201 may be resupplied to the ammonia decomposition reactor 101 as a combustion gas for combusting and removing the unreacted ammonia.

According to an example embodiment of the present disclosure, a portion of the first product gas discharged from the ammonia remover 201 may be resupplied to the ammonia remover 201 as a pressurizing gas.

The first product gas may include 75 to 80 vol% of hydrogen, 20 to 25 vol% of nitrogen, and 0.3 to 1 ppm of ammonia.

The first tail gas may include 10 to 20 vol% of hydrogen, 40 to 45 vol% of nitrogen, and 40 to 45 vol% of ammonia.

The first tail gas discharged from the ammonia remover 201 may be resupplied to the ammonia decomposition reactor 101 as the combustion gas, and for example, the first tail gas may be transferred to the combustor 103 of the ammonia decomposition reactor 101 and used as a fuel. The first tail gas includes ammonia. By using the unreacted ammonia as the combustion fuel, energy efficiency of the ammonia decomposition reactor 101 may be improved, and the unreacted ammonia may be removed by combustion. Alternatively, the ammonia included in the first tail gas transferred to the combustor 103 may be used as a fuel by co-firing with a fuel for the decomposition reaction.

When a portion of the first product gas discharged from the ammonia remover 201 is resupplied to the ammonia remover 201 as the pressurizing gas, a partial pressure of nitrogen within the ammonia remover 201 is lowered, thereby reducing the amount of nitrogen adsorption and improving adsorption performance of the ammonia remover 201. When the adsorption performance of the ammonia remover 201 is improved, a breakthrough time of an adsorption tower is increased, and ultimately, a total cycle time of an ammonia removal process may be reduced. A reduction in a cycle in the ammonia removal process of the ammonia remover 201 reduces the amount of gas consumed as a purge gas, thereby reducing the amount of hydrogen finally discarded. As a result, a recovery rate of an entire process is increased.

The ammonia adsorption is selectively adsorbing ammonia from the mixed gas including hydrogen, nitrogen, and unreacted ammonia, and ammonia may be adsorbed using an adsorption agent. The ammonia remover 201 may include a plurality of adsorption towers. The adsorption agent is not particularly limited as long as it is a material selectively adsorbing ammonia, but should be an adsorption agent having high ammonia selectivity. The ammonia adsorption agent should have the highest ammonia selectivity and preferably has higher nitrogen selectivity than hydrogen selectivity. For example, it may be at least one selected from the group consisting of carbon molecular sieve (CMS), zeolite, metal-organic framework (MOF), covalent organic framework (COF), activated carbon, alumina, and silica. Table 1 shows adsorption performance of a CMS adsorption agent as an example.

**[Table 1]**

| | **Gas** | **Adsorption pressure (bar)** | **Adsorption capacity (mmol/g)** |
|---|---|---|---|
| CMS | H₂ | 7 | 0.37 |
| | N₂ | 7 | 1.16 |
| | NH₃ | 7 | 6.02 |

The adsorption agent that has adsorbed ammonia in the ammonia remover 201 may desorb and recover ammonia while the adsorption agent is regenerated through processes such as depressurization and purge, and the desorbed ammonia may be recovered and recycled. Specifically, the ammonia remover 201 may desorb ammonia according to the washing process to regenerate the adsorption agent that has adsorbed ammonia. The washing of the ammonia remover 201 may be divided into high-temperature washing and low-temperature washing. The high-temperature washing may refer to a process of desorbing ammonia adsorbed in the adsorption agent of the ammonia remover 201 using high-temperature nitrogen gas, and the low-temperature washing may be a process of cooling a temperature of the adsorption agent.

The ammonia remover 201 may include a first product gas storage tank 202 storing a first product gas including hydrogen and nitrogen from which the ammonia has been removed, and a first tail gas storage tank 203 storing ammonia removed from the ammonia remover 201. In this case, the first product gas stored in the first product gas storage tank 202 is supplied to the nitrogen remover 301.

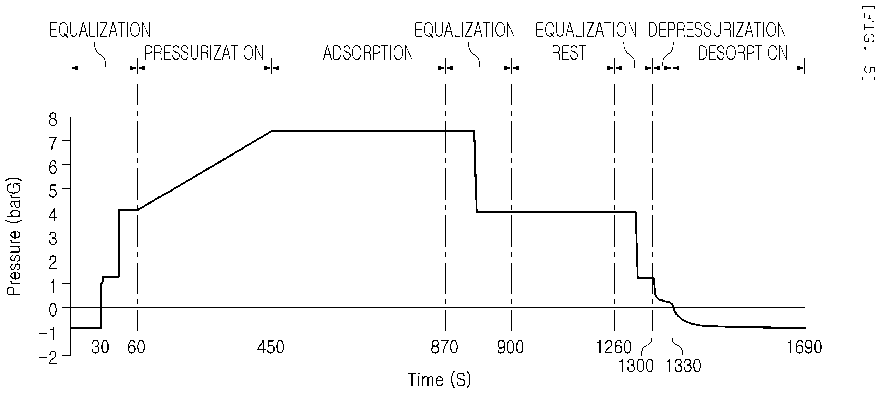

The ammonia remover 201 may undergo processes of pressure equalization, pressurization, adsorption, depressurization, and desorption. FIG. 5 illustrates a pressure change within one adsorption tower of the ammonia remover and the nitrogen remover.

The ammonia remover 201 may include a plurality of adsorption towers. In this case, each adsorption tower operates in a linkage manner. Table 2 shows a cycle of four adsorption towers according to an example embodiment. Here, one cycle may take about 28 minutes. When one cycle is completed, a next cycle proceeds immediately. In the plurality of adsorption towers, cycles are repeated, and an ammonia removal process may proceed continuously.

The cycle of the adsorption tower according to the following exemplary embodiment is merely illustrative of the present disclosure and does not limit the appended claims, and it will be apparent to those skilled in the art that various changes and modifications may be made within the scope and spirit of the present disclosure.

**[Table 2]**

| **SEQ step** | **1** | **2** | **3** | **4** | **5** | **6** | **7** | **8** | **9** | **10** | **11** | **12** |
|---|---|---|---|---|---|---|---|---|---|---|---|---|
| **Time (sec)** | **30** | **360** | **30** | **30** | **360** | **30** | **30** | **360** | **30** | **30** | **360** | **30** |
| **BED 1** | ADS | | | EQ2 | REST | EQ1 | BD | PG | EQ1 | EQ2 | PR | PR |
| **BED 2** | BD | PG | EQ1 | EQ2 | PR | PR | ADS | | | EQ2 | REST | EQ1 |
| **BED 3** | EQ2 | PR | PR | ADS | | | EQ2 | REST | EQ1 | BD | PG | EQ1 |
| **BED 4** | EQ2 | REST | EQ1 | BD | PG | EQ1 | EQ2 | PR | PR | ADS | | |

| | | | | | | | | | | | | |
|---|---|---|---|---|---|---|---|---|---|---|---|---|
| Each symbol represents the following processes: ADS (adsorption): adsorption process EQ1 (pressure equalization): first pressure equalization process EQ2 (pressure equalization): second pressure equalization process REST (rest): rest process BD (blowdown): depressurization process PR (pressurization): pressurization process PG (purge): desorption process | | | | | | | | | | | | |

The pressure equalization process is a process of equalizing pressures between two or more adsorption towers. The pressure equalization process may be divided into two stages of a first pressure equalization process and a second pressure equalization process. Each adsorption tower includes a valve connected to another adsorption tower. The pressure equalization process may be performed by opening and closing the valves according to a process sequence.

The first pressure equalization process is a process of opening valves between an adsorption tower that has undergone a desorption process and an adsorption tower that has undergone the rest stage, thereby equalizing the pressure of the adsorption tower that has undergone the desorption process with the pressure of the adsorption tower that has undergone the rest stage. The first pressure equalization process may be performed for about 30 seconds. Pressures of the adsorption towers after the first pressure equalization process may be about 1 barG.

The second pressure equalization process is a process of opening valves between an adsorption tower that has undergone the first pressure equalization process and an adsorption tower that has undergone an adsorption process, thereby equalizing the pressure of the adsorption tower that has undergone the first pressure equalization process with the pressure of the adsorption tower that has undergone the adsorption process. The second pressure equalization process may be performed for about 30 seconds. Pressures of the adsorption towers after the second pressure equalization process may be about 4 barG.

After the second pressure equalization process is completed, the pressurization process is performed. The first product gas discharged from the ammonia remover 201 is resupplied to the ammonia remover 201 as the pressurizing gas. By supplying the pressurizing gas, the pressure within the adsorption tower may be pressurized from about 4 barG to about 7.5 barG for about 390 seconds.

After the pressurization process is completed, the adsorption process is performed. The mixed gas is supplied from the ammonia decomposition reactor 101, and the ammonia is removed by adsorption. The adsorption time of the ammonia remover 201 may be 360 to 480 seconds, and the adsorption pressure may be 7 to 8 barG. When the adsorption time is 360 to 480 seconds, an ammonia removal rate may be maintained. When the adsorption time exceeds 480 seconds, the ammonia may no longer be adsorbed in the adsorption tower and is discharged, thereby decreasing the ammonia removal rate. When the adsorption pressure is 7 to 8 barG, the ammonia removal rate may be maximized. When the adsorption pressure is less than 7 barG, the amount of ammonia that the adsorption agent may adsorb is reduced due to impurities, thereby causing a problem in that the ammonia is not removed and is discharged.

After the adsorption process is completed, the second pressure equalization process is performed. Valves between the adsorption tower that has undergone the adsorption process and the adsorption tower that has undergone the first pressure equalization process are opened to equalize the pressure of the adsorption tower that has undergone the adsorption process with that of the adsorption tower that has undergone the first pressure equalization process. The second pressure equalization process may be performed for about 30 seconds. Pressures of the adsorption towers after the second pressure equalization process may be about 4 barG.

Thereafter, the adsorption tower has the rest stage. The rest stage may be performed for about 360 seconds.

After the rest stage is completed, the first pressure equalization process is performed. The valves between the adsorption tower that has undergone the rest stage and the adsorption tower that has undergone the desorption process are opened to equalize the pressure of the adsorption tower that has undergone the rest stage with that of the adsorption tower that has undergone the desorption process. The pressures of the adsorption towers after the first pressure equalization process may be about 1 barG. The first pressure equalization process may be performed for about 30 seconds.

Thereafter, the depressurization process is performed. The depressurization process is a process of adjusting a pressure of the adsorption tower to 0 barG in preparation for the desorption process. The depressurization process may be performed for about 30 seconds.

Thereafter, the desorption process is performed. In a state in which an upper valve of the adsorption tower is closed, the pressure is reduced using a vacuum pump. In this case, as the pressure of the adsorption tower decreases, an adsorbate weakly physically bound in the adsorption agent is removed. In the desorption process, the pressure of the adsorption tower may be reduced to about -0.9 barG to remove the adsorbate.

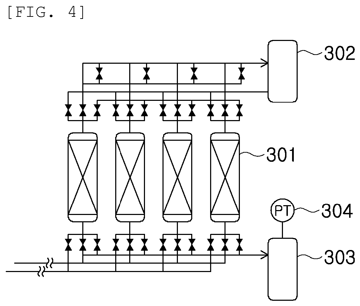

FIG. 4 is a diagram schematically illustrating a process of the nitrogen remover 301 according to an example embodiment of the present disclosure. The nitrogen remover 301 according to an example embodiment removes the nitrogen gas included in the first product gas and discharges the second product gas including hydrogen and a second tail gas. A portion of the second product gas discharged from the nitrogen remover 301 may be resupplied to the nitrogen remover 301 as the purge gas and the pressurizing gas, and a remaining portion of the second product gas may be recovered.

When the second product gas discharged from the nitrogen remover 301 is supplied to the nitrogen remover 301 as the purge gas and the pressurizing gas, purity stability in the nitrogen remover 301 may be secured.

The second product gas including hydrogen gas recovered from the nitrogen remover 301 may also be used as hydrogen energy. A second product gas storage tank 302 may store the recovered second product gas.

A portion of the second product gas stored in the second product gas storage tank 302 may be supplied to the nitrogen remover 301 as the purge gas and the pressurizing gas.

A portion of the second product gas stored in the second product gas storage tank 302 may be supplied to a place requiring the same, for example, fuel cells, petrochemical processes, ammonia synthesis, steelmaking processes, etc.

The second tail gas discharged from the nitrogen remover 301 may be resupplied to the ammonia remover 201 as the purge gas.

The second product gas may include 99 vol% or more of hydrogen.

The second tail gas may include 25 to 30 vol% of hydrogen, 70 to 75 vol% of nitrogen, and 0.5 to 1 ppm of ammonia.

The second tail gas including nitrogen gas removed from the nitrogen remover 301 may be used for washing the ammonia remover 201. When the second tail gas is resupplied to the ammonia remover 201 as the purge gas, a recovery rate of a hydrogen production process may be improved because the amount of hydrogen discarded in the hydrogen production process is reduced by reusing the second tail gas without discarding the same.

Through the linkage process linking the ammonia remover and the nitrogen remover, a recovery rate of hydrogen and purity of produced hydrogen may be increased. Furthermore, by reusing raw materials and minimizing wasted exhaust gas, the environmental pollution generated in the hydrogen production process may be prevented.

The nitrogen remover 301 may include a plurality of adsorption towers. The nitrogen remover 301 may include the adsorption agent that is a material selectively adsorbing nitrogen. The adsorption agent is not particularly limited as long as it is a material selectively adsorbing nitrogen, and may be, for example, at least one selected from the group consisting of CMS, zeolite, MOF, COF, activated carbon, alumina, and silica.

The nitrogen remover 301 may include a second tail gas storage tank 303 storing a second tail gas discharged from the nitrogen remover 301 and a second product gas storage tank 302 storing a second product gas.

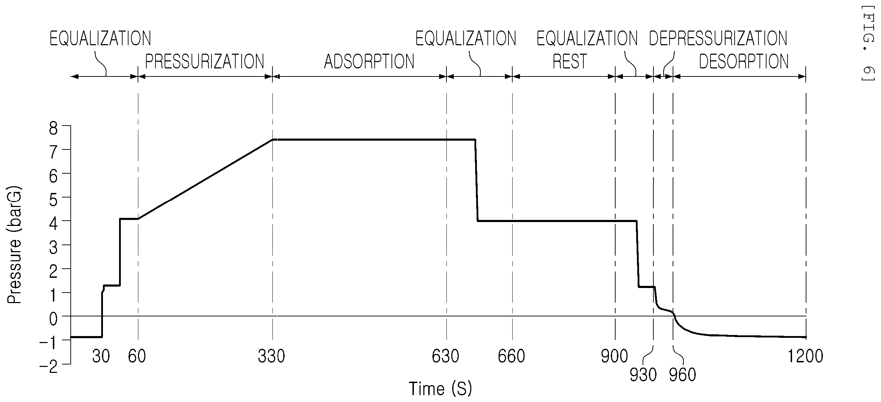

The nitrogen remover 301 may undergo processes of pressure equalization, pressurization, adsorption, depressurization, and desorption. FIG. 6 illustrates a pressure change within one adsorption tower of the ammonia remover and the nitrogen remover.

The nitrogen remover 301 may include a plurality of adsorption towers. In this case, each adsorption tower simultaneously operates in a linkage manner. Table 3 shows a cycle of four adsorption towers according to an example embodiment. Here, one cycle has a duration of 20 minutes. The cycle of the adsorption tower according to the following exemplary embodiment is merely illustrative of the present disclosure and does not limit the appended claims, and it will be apparent to those skilled in the art that various changes and modifications may be made within the scope and spirit of the present disclosure.

**[Table 3]**

| **SEQ step** | **1** | **2** | **3** | **4** | **5** | **6** | **7** | **8** | **9** | **10** | **11** | **12** |
|---|---|---|---|---|---|---|---|---|---|---|---|---|
| **Time (sec)** | **30** | **240** | **30** | **30** | **240** | **30** | **30** | **240** | **30** | **30** | **240** | **30** |
| **BED 1** | ADS | | | EQ2 | REST | EQ1 | BD | PG | EQ1 | EQ2 | PR | PR |
| **BED 2** | BD | PG | EQ1 | EQ2 | PR | PR | ADS | | | EQ2 | REST | EQ1 |
| **BED 3** | EQ2 | PR | PR | ADS | | | EQ2 | REST | EQ1 | BD | PG | EQ1 |
| **BED 4** | EQ2 | REST | EQ1 | BD | PG | EQ1 | EQ2 | PR | PR | ADS | | |

Each symbol is the same as shown in Table 2.

The pressure equalization process is the same as described in the ammonia remover 201.

After first and second pressure equalization processes are completed, the pressurization process is performed. The second product gas discharged from the nitrogen remover 301 is resupplied to the nitrogen remover 301 as the pressurizing gas. By supplying the pressurizing gas, the pressure within the adsorption tower may be pressurized from about 4 barG to about 7.5 barG for about 270 seconds.

After the pressurization process is completed, the adsorption process is performed. The first product gas is supplied from the ammonia remover 201, and nitrogen is removed by adsorption. The adsorption time of the nitrogen remover 301 may be 240 to 360 seconds, and the adsorption pressure may be 7 to 8 barG. A maximum adsorption amount at which the adsorption agent may adsorb ammonia and a maximum adsorption amount at which the adsorption agent may adsorb nitrogen are different. Nitrogen undergoes the adsorption process for a relatively shorter time than ammonia.

When the adsorption time is 240 to 360 seconds, the nitrogen removal rate may be maintained. When the adsorption time exceeds 360 seconds, the nitrogen may no longer be adsorbed in the adsorption tower and is discharged, thereby decreasing the nitrogen removal rate. When the adsorption pressure is 7 to 8 barG, there is an advantage of maximizing nitrogen removal efficiency. When the adsorption pressure is less than 7 barG, the amount of nitrogen that the adsorption agent may adsorb is reduced due to impurities, thereby causing a problem in that the nitrogen is not removed and is discharged.

The adsorption pressure of the nitrogen remover 301 may be lower than that of the ammonia remover 201. A differential pressure (0.1 barG) between the ammonia remover 201 and the nitrogen remover 301 may be used as a driving force of gas. In this case, gas may be transferred to the nitrogen remover without a separate gas transfer device in the ammonia remover 201.

After the adsorption process is completed, the second pressure equalization process, the rest stage, the depressurization process, and the desorption process are performed, and each process is the same as described in the ammonia remover 201.

### Mode for Invention

### Examples

Hereinafter, the present disclosure will be further described with reference to specific experimental examples. Example embodiments of the present disclosure are not limited to the examples, and high-purity hydrogen may be secured by changing operating conditions, and variations according to an ammonia decomposition rate may be accommodated.

Ammonia was introduced into an ammonia decomposition reactor to obtain a mixed gas including hydrogen, nitrogen, and unreacted ammonia. An ammonia remover including four adsorption towers and a nitrogen remover including four adsorption towers were used.

In the ammonia remover, the mixed gas was introduced at 20 SLPM into an adsorption tower that had undergone a first pressure equalization process for 30 seconds to equalize the pressure to 1 barG, a second pressure equalization process for 30 seconds to equalize the pressure to 4 barG, and a pressurization process at 7.5 barG for 390 seconds. CMS was used as the adsorption agent. Thereafter, an adsorption process was performed at 7.5 barG for 420 seconds to discharge a first product gas and a first tail gas including hydrogen and nitrogen. Thereafter, the first product gas was supplied to a first product gas storage tank, and the first tail gas was supplied to a first tail gas storage tank and stored therein. Thereafter, for the adsorption tower, a second pressure equalization process was performed for 30 seconds to equalize the pressure to 4 barG, followed by a rest stage for 360 seconds. Thereafter, for the adsorption tower, the first pressure equalization process was performed for 30 seconds to equalize the pressure to 1 barG, a depressurization process was performed for 30 seconds to reduce the pressure to 0 barG, and a desorption process was performed for 360 seconds to reduce the pressure to -0.9 barG, thereby removing the adsorbate. A desorption flow rate of the desorption process was 1.3 SLPM.

Thereafter, in the nitrogen remover, the first product gas stored in the first product gas storage tank was introduced at 18.9 SLPM into an adsorption tower that had undergone a first pressure equalization process for 30 seconds to equalize the pressure to 1 barG, a second pressure equalization process for 30 seconds to equalize the pressure to 4 barG, and a pressurization process at 7.5 barG for 270 seconds. The CMS was used as the adsorption agent. Thereafter, the adsorption process was performed at 7.4 barG for 300 seconds to remove nitrogen included in the first product gas and to discharge a second product gas including hydrogen and a second tail gas. By using an adsorption pressure of 7.5 barG for the ammonia remover and an adsorption pressure of 7.4 barG for the nitrogen remover, a differential pressure (0.1 barG) between two processes was used as a driving force of gas. The second product gas was supplied to a second product gas storage tank, and the second tail gas was supplied to a second tail gas storage tank and stored therein. Thereafter, the adsorption tower undergone a second pressure equalization process for 30 seconds to equalize the pressure to 4 barG, and a rest stage was performed for 240 seconds. Thereafter, for the adsorption tower, the first pressure equalization process was performed for 30 seconds to equalize the pressure to 1 barG, the depressurization process was performed for 30 seconds to reduce the pressure to 0 barG, and the desorption process was performed for 240 seconds to reduce the pressure to -0.9 barG, thereby removing the adsorbate. The desorption flow rate of the desorption process was 1.0 SLPM.

One cycle, in which the sequence was repeated three times, was repeated 10 times.

From a second cycle, the first tail gas stored in the first tail gas storage tank was resupplied to the ammonia decomposition reactor as the combustion gas for removing the unreacted ammonia by combustion, the first product gas stored in the first product gas storage tank was resupplied to the ammonia remover as the pressurizing gas, a second tail gas stored in the second tail gas storage tank was resupplied to the ammonia remover as a purge gas, and a second product gas stored in the second product gas storage tank was resupplied to the nitrogen remover as the purge gas and the pressurizing gas.

Operating conditions of the ammonia remover and the nitrogen remover are shown in Table 4.

**[Table 4]**

| **Division** | **Ammonia remover** | **Nitrogen remover** |
|---|---|---|
| Adsorption time (sec) | 420 | 300 |
| Adsorption pressure (barG) | 7.5 | 7.4 |
| Average desorption pressure (barG) | -0.9 | -0.85 |
| Injection gas flow rate (SLPM) | 20 | 18.9 |
| Purge flow rate (SLPM) | 1.3 | 1.0 |

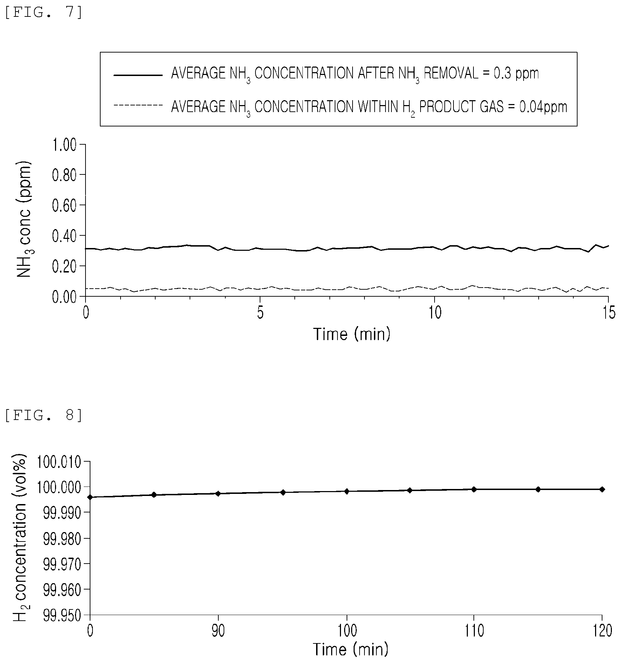

During a process, concentrations of ammonia included in a first product gas and a second product gas were measured, and results are illustrated in FIG. 7.

Concentrations of ammonia included in the first product gas, the second tail gas, and the second product gas were measured using a Fourier transform infrared spectrometer (FT-IR) of an Antaris IGS analyzer model. The concentration of ammonia was analyzed by identifying peaks of functional groups corresponding to ammonia and constructing a concentration calibration curve for the identified peaks.

A concentration of hydrogen included in the second product gas was analyzed by a gas chromatography method using an Agilent 8890GC model. In this case, since the high-purity hydrogen may not be directly measured, the concentration of hydrogen was calculated by analyzing impurities N₂ and NH₃ and performing relative integration.

Concentrations of respective components included in the first tail gas, and concentrations of nitrogen and hydrogen included in the first product gas and the second tail gas were analyzed using an HPR-20 R&D model of Hiden Analytical. This analysis method is a quadrupole mass spectrometry method, and specific ions may be detected when substances having different voltages reach a detector. Through this, calibration curves for respective substances were constructed and analysis was performed.

The concentration of ammonia in the first product gas that had passed through the ammonia remover was about 0.3 ppm, confirming that the concentration of ammonia was significantly low. The concentration of ammonia in the second product gas that had passed through the nitrogen remover was about 0.04 ppm, indicating that high-purity hydrogen containing little to no ammonia may be obtained.

After 10 cycles, the compositions of the first tail gas, the first product gas, the second tail gas, and the second product gas were shown in Table 5.

**[Table 5]**

| **Gas** | **First tail gas** | **First product gas** | **Second tail gas** | **Second product gas** |
|---|---|---|---|---|
| N₂ | 42 vol% | 25 vol% | 71 vol% | 20ppm |
| H₂ | 44 vol% | 75 vol% | 29 vol% | 99 vol% |
| NH₃ | 14 vol% | 0.3ppm | 0.6ppm | 0.04ppm |

The hydrogen concentration of the second product gas was measured during the process, and the results were illustrated in FIG. 8. It was confirmed that high-purity hydrogen of 99.99 vol% or higher may be continuously produced in a linkage process including the ammonia remover and the nitrogen remover.

The hydrogen recovery rate was calculated using the following equation. 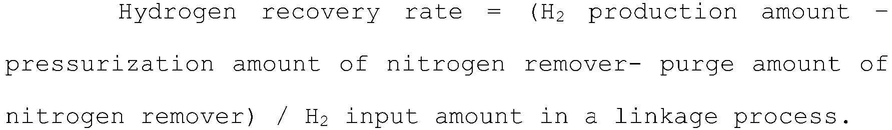 Hydrogen recovery rate = (H2 production amount - pressurization amount of nitrogen remover- purge amount of nitrogen remover) / H2 input amount in a linkage process.

As a result, the hydrogen recovery rate was 87.9%, thereby confirming that a significantly high hydrogen recovery rate may be achieved.

### Description of Reference Characters

- 101:: Ammonia Decomposition Reactor
- 102:: Reactor
- 103:: Combustor
- 104:: Liquid Ammonia Tank
- 105:: Air Blower
- 201:: Ammonia Remover
- 202:: First Product Gas Storage Tank
- 203:: First Tail Gas Storage Tank
- 301:: Nitrogen Remover
- 302:: Second Product Gas Storage Tank
- 303:: Second Tail Gas Storage Tank

## Claims

1. A hydrogen production apparatus, comprising:
an ammonia decomposition reactor decomposing ammonia to discharge a mixed gas including hydrogen, nitrogen, and unreacted ammonia;
an ammonia remover receiving the mixed gas, adsorbing and removing the unreacted ammonia included in the mixed gas, and discharging a first product gas and a first tail gas; and
a nitrogen remover receiving the first product gas, removing nitrogen included in the first product gas, and discharging a second product gas and a second tail gas,
wherein the second product gas discharged from the nitrogen remover is resupplied to the nitrogen remover as a purge gas and a pressurizing gas.

2. The hydrogen production apparatus of claim 1, wherein the first tail gas discharged from the ammonia remover is resupplied to the ammonia decomposition reactor as a combustion gas for removing the unreacted ammonia by combustion,
the first product gas discharged from the ammonia remover is resupplied to the ammonia remover as the pressurizing gas, and
the second tail gas discharged from the nitrogen remover is resupplied to the ammonia remover as the purge gas.

3. The hydrogen production apparatus of claim 1, wherein the first product gas includes 75 to 80 vol% of hydrogen and 20 to 25 vol% of nitrogen.

4. The hydrogen production apparatus of claim 1, wherein the first tail gas includes 10 to 20 vol% of hydrogen, 40 to 45 vol% of nitrogen, and 40 to 45 vol% of ammonia.

5. The hydrogen production apparatus of claim 3, wherein the first product gas includes 0.3 to 1 ppm of ammonia.

6. The hydrogen production apparatus of claim 1, wherein the second product gas includes 99 vol% or more of hydrogen.

7. The hydrogen production apparatus of claim 1, wherein the second tail gas includes 25 to 30 vol% of hydrogen and 70 to 75 vol% of nitrogen.

8. The hydrogen production apparatus of claim 7, wherein the second tail gas includes 0.5 to 1 ppm of ammonia.

9. The hydrogen production apparatus of claim 1, wherein the ammonia remover and the nitrogen remover include carbon molecular sieve (CMS), zeolite, metal-organic framework (MOF), or covalent organic frameworks (COF) as an adsorption agent.

10. The hydrogen production apparatus of claim 1, wherein an adsorption time in the ammonia remover is 360 to 480 seconds, and an adsorption pressure is 7 to 8 barG.

11. The hydrogen production apparatus of claim 1, wherein an adsorption time in the ammonia remover is 240 to 360 seconds, and an adsorption pressure is 7 to 8 barG.
